# EUROPEAN PATENT SPECIFICATION

(11) **EP 3 444 319 B1**
(45) Date of publication and mention of the grant of the patent: **02.12.2020**
(21) Application number: 18187670.7
(22) Date of filing: 07.08.2018
(51) Int. Cl.: C10B 53/06, C10B 47/20, C10G 1/02, C10G 1/06

(54) **INDIRECTLY HEATED RETORTING REACTOR WITH HEAT PIPES AND SYSTEM FOR RETORTING OIL SHALE**
INDIREKT BEHEIZTER RETORTENREAKTOR MIT WÄRMEROHREN UND SYSTEM ZUM RETORTEN VON ÖLSCHIEFER
RÉACTEUR DE DISTILLATION EN CORNUE CHAUFFÉE INDIRECTEMENT AVEC DES CALODUCS ET SYSTÈME DE DISTILLATION EN CORNUE DE SCHISTES BITUMINEUX

(30) Priority: 14.08.2017 EP 17186105
(43) Date of publication of application: 20.02.2019
(73) Proprietor: Albakri, Sami Abdulrahman A., 2342 -6233 Jeddah (SA)
(72) Inventor: Albakri, Sami Abdulrahman A., 2342 -6233 Jeddah (SA)
(74) Representative: LifeTech IP Spies & Behrndt Patentanwälte PartG mbB

(56) References cited:
- CN-A- 106 433 723
- DE-A1- 19 900 116
- GB-A- 1 599 398
- US-A- 4 160 720
- K M Jayakar ET AL: "RECOVERY OF OIL FROM TAR SANDS BY AN ENERGY-EFFICIENT PROCESS", Fuel Chemistry Division of ACS, 29 August 1980 (1980-08-29), XP055441032, Las Vegas Retrieved from the Internet: URL:https://web.anl.gov/PCS/acsfuel/prepri nt%20archive/Files/25_3_SAN%20FRANCISCO_08 -80_0148.pdf [retrieved on 2018-01-15]

## Description

### TECHNICAL FIELD OF THE INVENTION

The invention is related to indirectly heated retorting reactor by heat pipe heat exchangers for treatment (retorting) of oil shale and also the system and the process for treatment of oil shale or solid fuels such as oil sand, tar sand or coal ... etc. by this reactor and system. In other words in this invention, a system and process for retorting oil shale with indirectly heated retorting reactor with heat pipe heat exchangers is developed.

### BACKGROUND OF THE INVENTION

The continuous increase in the consumption of fossil fuels in the last few decades to meet the energy demand suggests that the turning point for depletion of petroleum, natural gas and coal reserves has already been reached. However, the economic and social development of each country is highly dependent on the energy security, so that the energy supply is a strategic interest of any nation. Oil shale provides an alternative energy source that can improve the economy, independence and self-sufficiency in energy supply. When the oil shale is heated, it yields to combustible gases, shale oil and solid residual (known as retort shale, spent shale, processed shale or sometimes semi coke).

The shale oil is obtained either by an underground retorting process or by an aboveground retorting process of the oil shale. The underground retorting process (known as in-situ or in-place) is achieved by introducing heat to pyrolyse the underground oil shale deposits. This process has the advantages of preventing the mining, treatment, transport and disposing of large quantity of material. However, the in-situ retorting suffers from lack of permeability of the oil shale deposit, low thermal conductivity of the oil shale, underground water pollution risk, possible toxic and hydrocarbon gas leakage from the heated reservoir. Other challenge is the big energy requirement for oil shale retorting. In-situ applications highly depend on external energy sources such as electricity and natural gas. In order to improve self-sufficiency of the deposit, a modified in-situ retorting method can be applied. Here, the upper portion of the oil shale deposit is mined out to provide a void volume and the rest is shattered using conventional explosions. In order to achieve that, hot air and gases are introduced to the voids of the reservoir to partially combust the evolving hydrocarbon gases to create required energy for the retorting. When the underground mining costs, operational and capital cost are considered, the modified in-situ oil shale retorting technique cannot compete with current techniques and environmental impacts are still concern.

In the aboveground retorting process, the oil shale is mined out and then heated in retorting reactors. Pre-treatment of the oil shale (e.g. excavated from the mine, crushing and screening) is essential to ensure the retorting operation requirements. The aboveground retorting process can be classified into lump oil shale retorting and particulate oil shale retorting. In the lump oil shale retorting process, a hot gas carrier is employed for supplying the heat to the oil shale, while a hot solid carrier is used for the particulate oil shale retorting processes. The thermal energy source for heating the hot gas carrier or the hot solid carrier is provided by a combustion process of the combustible gases, part of the produced shale oil or the residual char (spent shale). The lump oil shale retorting process requires longer time for retorting (several hours) due to the low heat conductivity coefficient of oil shale, compared to the particulate oil shale retorting processes (several minutes). Furthermore, the particulate oil shale retorting process is characterized by high shale oil yield compared to Fisher Assay with high heating value of the combustible gases due to no contamination with combustion gases, but the construction is complex as well as the maintenance is expensive and thus it might not be feasible.

### STATE OF THE ART (PRIOR ART)

Nowadays, several oil shale retorting techniques, based on hot gas carrier or hot solid heat carrier, are available such as Estonian Kiviter lump oil shale retorting process, Brazilian Petrosix lump oil shale retorting, Chinese Fushun lump oil shale retorting, Estonian Galoter, Enefit and Petroter particulate oil shale retorting processes and Alberta Taciuk particulate oil shale retorting process. These commercial retorting techniques are direct or indirect heating type retorts. The indirect heating type retorts are types of retorts, in which the heat is supplied from the hot medium to the oil shale through indirect hot gas injection or hot ash (i.e. hot ash mixes with cold oil shale particles in rotary systems). Hot gas injection heating technology suffers from low thermal efficiency and insufficient heat transfer from hot gas to oil shale. In hot/cold solid mixtures, the percentage of hot solid particles are very high, which lead to increasing size of equipment, complex hot solid particle transfer systems and at the end expensive equipment prices.

In the patent search performed for determining the indirectly heated retorting reactors, US2782019A, US3346044A, US2015204179A1, WO2008147503A1 and CN104140830A have been found. The reactors that have been disclosed in these documents are not in the form of two separate chambers and does not comprise of an indirect heating retort and a combustion chamber, which are separated by a technically sealed middle wall and also does not comprise any heat pipe heat exchangers connected in between the separate chambers.

An article having the title "Thermal Recovery of Oil from Tar Sands by an Energy-Efficient process" by K. M. Jayakar, J. D. Seader, A. G. Oblad, and K. C. Hanks Departments of Chemical Engineering and Fuels Engineering, University of Utah, Salt Lake City, Utah 84112, which is publication of thesis having the title of "CHEMISTRY OF OIL PROOUCTION FROM TAR SANDS" submitted to the Department of Chemical Engineering of the University of Utah, August 1979 is also related to recovery of oil from tar sands. In this publication, the combustion chamber and the retorting chamber are not physically separated from each other. Flue gasses emerging from combustion go directly to the pyrolysis part and mix with the hydrocarbon vapours recovered (treated) from the tar sand. This has a negative effect that the calorific value of the retort gases decreases and it becomes harder to combust them. Another disadvantage is that the coke (pyrolysed in the pyrolysis part) is combusted in the combustion part. If the inorganic composition of the solid fuel tend to release emissions like SOₓ, CO₂, CO, when they are heated to ultimate temperatures, additional filtration system is required and CO₂ footprint of the plant goes up.

Additionally, below publications can also be considered in the field of the present invention:
- DE 199 00 116 A1 (UN IV MUENCHEN TECH [DE)) 6 July 2000 (2000-07-06)
- GB 1599398 A (HUMPHREYS & GLASGOW LTD) 30 September 1981 (1981-09-30)
- US 4 160 720 A (SEADER JUNIOR D ET AL) 10 July 1979 (1979-07-10)
- K M Jayakar ET AL: "RECOVERY OF OIL FROM TAR SANDS BY AN ENERGY-EFFICIENT PROCESS", Fuel Chemistry Division of ACS, 29 August 1980 (1980-08-29), XP055441 032, Las Vegas. Retrieved from the Internet: URL:https://web.anl.gov/PCS/acsfuel/preprint%20archive/Files/ 25_3_SAN%20FRANCISCO 08-80_0148.pdf [retrieved on 2018-01-15)

The document DE 199 00 116 A1 describes two combustion/gasification chambers that are connected with heat pipe heat exchangers to be used in biomass gasification. The process disclosed in this document is fully different from the present invention.

The document GB 1599398 A describes the use of heat pipe heat exchangers for heat transfer between two chamber (source and sink). The process disclosed in this document is fully different from the present invention.

The documents US 4 160 720 A and K M Jayakar ET AL: "RECOVERY OF OIL FROM TAR SANDS BY AN ENERGY-EFFICIENT PROCESS" describe the possible retorting of tar sand using a vertical reactor with heat pipe heat exchangers. Here, the flue gas from combustion chamber flows in the retort and the mixture of the flue gas/retort gases exit from the top. Furthermore, the processes disclosed in these documents are fully different from the present invention.

Document CN 106 433 723 A discloses a bulk oil shale pyrolysis processing system including a drying machine, a hopper and a heat storage type pyrolysis device including a pyrolysis chamber.

### AIM OF THE INVENTION

This invention aims to develop a system and process for retorting oil shale by indirectly heated retorting reactor (pressurised retort) and combustion section (multi-fuel combustor), which are combined with heat pipe heat exchangers, waste heat recovery system, fluidized bed ash cooler, oil shale dryer and condensation system as defined in the appended claims.

This invention simplifies the heat transfer process from the combustion section (multi-fuel combustor) to the retorting section (pressurised retort) by using heat pipe heat exchangers that connect retorting and combustion sections and provide necessary heat transfer without any additional mechanic system, which have positive effect on capital and operational cost. Other aim is to achieve high heat transfer rate for oil shale particles in order to reduce the residence time of oil shale particles in retorting section and affects the capacity positively. On the other hand, the processes developed in this invention help to reduce the water consumption, to maximize thermal efficiency and to minimize operational and capital cost. Additionally and in order to produce high calorific value of retort gases, the retorting section and the combustion chamber are physically separated from each other.

### DEFINITION OF FIGURES

In order to better describe the indirectly heated retorting reactor with heat pipe heat exchangers and system for retorting the oil shale (the system and process for retorting oil shale with indirectly heated retorting reactor with heat pipe heat exchangers), which is developed in this invention, Figures have been prepared. Definitions of the Figures are below:
Figure 1- Schematic view of the elements of the system
Figure 2- Schematic view of the process and system (low-temperature heat transfer fluid such as steam or process water is used for drying oil shale)
Figure 3- Schematic view of the process and system (thermal oil is used for drying oil shale)

### DEFINITION OF PARTS/FEATURES REFERED IN THE FIGURES

In order to better describe the indirectly heated retorting reactor with heat pipe heat exchangers and system for retorting the oil shale (the system and process for retorting oil shale with indirectly heated retorting reactor with heat pipe heat exchangers), which is developed in this invention, the features in the Figures have been numbered. Definitions of the features are below:
- 1-: Multi-fuel combustor
- 2-: Pressurised retort
- 3-: Heat pipe heat exchangers
- 4-: Waste heat recovery system
- 5-: Oil shale dryer
- 6-: Fluidized bed ash cooler
- 7-: Condensation system
- 8-: Mill (to grind the raw oil shale)
- 9-: Entry of raw oil shale into the mill
- 10-: Container
- 11-: Rotary feeder to feed oil shale into the dryer
- 12-: Conveyor screw to feed oil shale into the dryer
- 13-: Gas-vapour exit of oil shale dryer
- 14-: Rotary feeder at the entry and the exit of pressurised retort
- 15-: Screw conveyor at the entry and the exit of pressurised retort
- 16-: Cyclone 1
- 17-: Cyclone 2
- 18-: Rotating-plate air preheater heat exchanger
- 19-: Shale oil exit of condensation system
- 20-: Shale oil exit of container
- 21-: Shale oil exit of container to multi-fuel combustor
- 22-: Exit of non-condensable shale gases from condensation system
- 23-: Exit of waste water from condensation system
- 24-: Boiler feedwater pump
- 25-: Back-pressure steam turbine/ Extraction steam turbine
- 26-: Condenser of steam turbine
- 27-: Flue gas outlet of waste heat recovery system
- 28-: Hot shale ash outlet of cyclone 1
- 29-: Thermal oil heat recovery system
- 30-: Thermal oil pump
- 31-: Other process components with thermal loads
- 32-: Flue gas outlet of thermal oil heat exchanger
- 33-: Thermal oil exit of thermal oil heat exchanger
- 34-: thermal oil heat exchanger

### BRIEF EXPLANATION OF THE INVENTION

### Process and system components

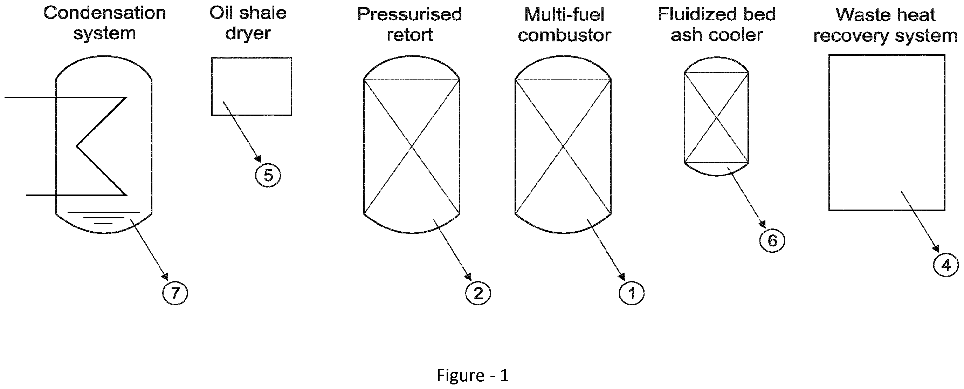

The present invention (the system and process for retorting oil shale with indirectly heated retorting reactor with heat pipe heat exchangers), described below, relates to a novel system and process that comprises a multi-fuel combustor (1), a pressurised retort (2), an oil shale dryer (5), a fluidized bed ash cooler (6), a waste heat recovery (4) and a condensation system (7) (schematically shown in Figure 1) as main elements. The main elements are briefly described below:
**Multi-fuel combustor (1):** The combustor is suitable for the combustion of different fuels, including spent shale (solid fuel), shale oil (liquid fuel), shale gases and waste gases (gaseous fuel). The combustor can be operated as bubbling fluidized bed or circulating fluidized bed reactor.
**Pressurised retort (2):** The pressurised retort is designed as a moving bed with continuous oil shale feed from the top. Both the spent shale and the retort gases exit at the bottom of the retort that is operated with an excess pressure compared to the atmospheric multi-fuel combustor (1) to prevent air/flue gas leakage from the multi-fuel combustor (1) to the pressurised retort (2). The retort gases may also exit from several locations at the sidewall of the pressurised retort (2).
**Waste heat recovery system (4):** The heat recovery unit from the flue gas is arranged downstream of the multi-fuel combustor and absorbs the waste heat of the flue gas for possible use in the oil shale dryer or where it needs in the process.
**Fluidized bed ash cooler (6):** The fluidized bed ash cooler system cools down the shale ash temperature and preheats the combustion air that is supplied to the multi-fuel combustor. The cooler can be operated as bubbling fluidized bed or circulating fluidized bed system with atmospheric pressure. Here, it should be mentioned that other ash cooler systems could be used (e.g. fluid bed coolers or moving bed fluidized bed cooler).
**Oil shale dryer (5):** The oil shale dryer decreases the moisture content of the raw oil shale. Low-temperature steam, process water or thermal oil from the waste heat recovery system provides the required thermal energy for the drying process.
**Condensation** system **(7):** The condensation system separates the shale oil vapours from the retort gases. In other words, it extracts wastewater, shale oil and non-combustible gases (shale gases) from the retort gases. The shale oil is stored in a container (10) and the non-condensable shale gases are sent to the multi-fuel combustor.

### Process description

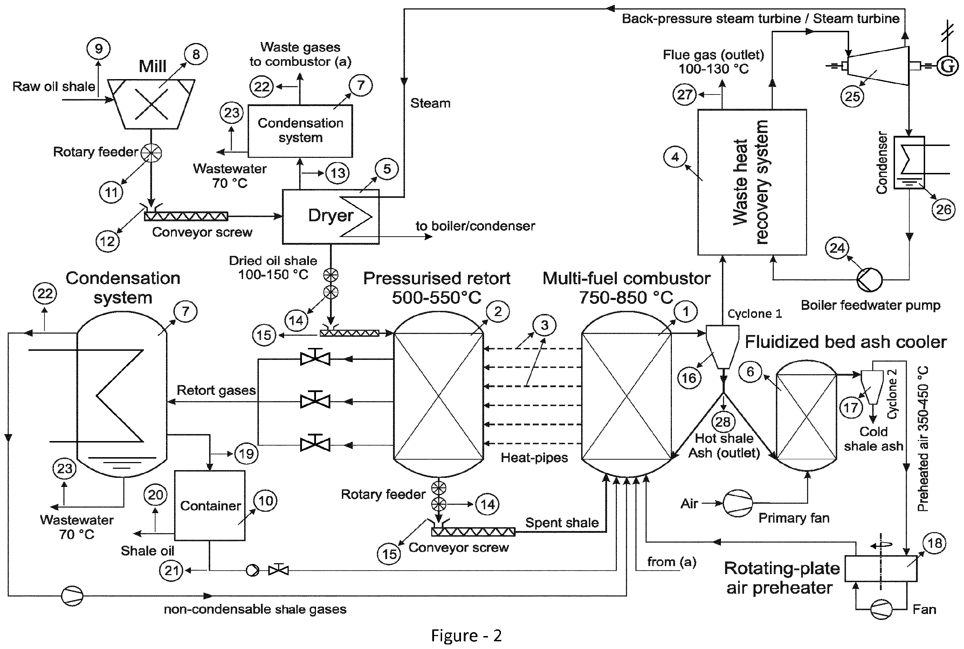

A simplified process scheme of the process and the system developed in this invention is illustrated in Figure 2.

The raw oil shale is first crushed/grinded by the mill (8) to reduce its size. The crushed/grinded oil shale is fed to the dryer by rotary feeder (11) and/or conveyor screw (12) to be dried. Oil shale is dried to decrease its moisture content. From an exergetic point of view, it is favourable to dry the oil shale using a low-temperature heat transfer fluid (e.g. low-temperature steam or process water). The waste gas and vapour in the oil shale dryer (5) stream out from the gas-vapour exit (13) of the dryer to the condensation system (7). In the later, the wastewater condensates and the waste gases are supplied to the multi-fuel combustor (1) to be burned. The condensation heat may be recovered to use in the process. Wastewater with a temperature of about 70 °C (23) and non-condensable waste gases (22) leave the condensation system (7). Using a rotary feeder (14) and/or screw conveyor (15), the dried oil shale is fed to the top part of the pressurised retort (2) and falls down to the retort bottom due to gravity. The pressurised retort (2) is heated by means of heat pipe heat exchangers (3) connected to the multi-fuel combustor (1).

The heat pipe is a closed pipe that contains a certain amount of working material. High-temperature heat pipes can be used as effective heat exchangers, where the heat transfer is based on phase change. Phase change can be evaporation (heat source) and condensation (heat sink) of working material or any other type of phase change. The heat supply in the evaporation zone leads to evaporation of the working material. The working material then flows through the adiabatic transportation zone to the condensation zone, where it condenses under heat release. Capillary forces induced by capillary structure of the heat pipe enable the working fluid to flow back to the evaporator zone. The gravity supports the backflow of the working material, when the heat pipes (3) are inclined or vertically installed (evaporator below the condenser). The working material/liquid is selected according to the desired temperature range of the heat transfer in the process. In general, alkali metals are suitable for high temperature ranges. In case of a temperature range of 700 °C - 1000 °C, the working fluid is sodium and it is for example potassium or cesium for a temperature range of 400 °C - 700 °C.

The middle wall that is built between the pressurised retort (2) and the multi-fuel combustor (1) is the central element of the heat pipe (3) heat exchangers. It supports the heat pipes (3), mechanically stabilizes the casing and separates the retort and the combustor from each other, preventing gas bypass despite the possible pressure difference. In order to avoid any possible deformation of the heat pipes, the pipes may be supported by additional supporting walls that are mounted in the middle parts of both reactors (the pressurised retort (2) and the multi-fuel combustor (1)). The pressure in the pressurised retort (2) is controlled, so that a light excess pressure is existing. Accordingly, the unwanted air/flue gas leakage from the multi-fuel combustor (1) to the pressurised retort (2) is prevented.

While the oil shale in the pressurised retort (2) is heated by means of the heat pipe (3) heat exchangers, its kerogen decomposes to shale gases and oil vapours (both known as retort gases). Finally, the retort gases exit at the bottom or from several locations at the sidewall of the retort (2). Compared to counter flow (i.e. the oil shale flows from top to bottom, while the retort gases stream from bottom to top), the co-current flow prevents the possible condensation of the hot retort gases with the relatively cold oil shale at the top part of the retort (2). This is of high importance in order to avoid higher agglomeration rate of the oil shale particles, which may finally result in a blockage of the pressurised retort (2).

At the bottom of the pressurised retort (2), a rotary feeder (14) and/or screw conveyor (15) are used to transfer the spent shale to the multi-fuel combustor (1) to be burned. The spent shale consists of fixed carbon (organic carbon) and a mixture of mineral materials (e.g. calcium carbonate and silicon dioxide). The combustion of the spent shale in the combustor has two advantages. It helps on the one hand to reduce the organic carbon of the spent shale, resulting in residues (shale ash) that are inert to meet the regulations of environmental protection legislation, in particular the requirements on water and air pollution. On the other hand, the calcium carbonate (CaCO₃) is calcined in the multi-fuel combustor and the obtained calcium oxide (CaO) is used for the flue gas desulphurisation.

The retort gases with a temperature of 500°C - 550 °C leave the pressurised retort (2) and flow into a condensation system (7). Higher temperatures above 550 °C lead to produce more shale gases (i.e. more non-condensable gases and less oil vapours). The condensation system (7) extracts wastewater, shale oil and non-combustible gases (shale gases) from the retort gases. The condensation heat may be recovered to use in the process. In the condensation system (7), the shale oil is extracted and stored in a container (10) via shale oil exit (19) of condensation system (7), while the non-condensable shale gases are sent to the multi-fuel combustor (1) via exit of non-condensable shale gases (22). Shale oil is collected in the container (10). Shale oil is received from the container (10) via shale oil exit (20) of container (10). Part of the shale oil produced can be used in the multi-fuel combustor (1) to maintain the required minimum combustion temperature in case of the insufficient calorific values of the supplied fuels (spent shale, shale gases and waste gases) as well as to warm-up the combustor during the start-up procedure. Part of the shale oil in the container is sent to the multi-fuel combustor (1) via shale oil exit (21) of container (10) to multi-fuel combustor (1). The wastewater is received from the condensation system (7) via exit of the wastewater (23) from the condensation system (7).

Preheated air with a temperature of approximately 250 °C - 450 °C is supplied at the bottom of the multi-fuel combustor (1) and the spent shale is deployed as bed material. The air/multi-fuel mixture is combusted and part of the thermal energy released is absorbed by the heat pipe (3) heat exchangers and transferred to the pressurised retort (2) for oil shale retorting. The remaining heat of the gas-solid mixture at approximately 750 °C - 850 °C (but it can higher or lower depending on requirement) streams from the multi-fuel combustor (1) to a first cyclone (16). The hot shale ash are separated from the gas-solid mixture in the cyclone 1 (16) from hot shale ash outlet (28). Part of the shale ash may circulate back into the bed and the remaining part flows into a fluidized bed ash cooler (6). The fluidized bed ash cooler (6) cools down the shale ash temperature and simultaneously preheats the combustion air for the multi-fuel combustor (1).

The cold shale ash exits the second cyclone (17) to a wet ash removal unit (not shown in the Figures) and then is fed to ash silos, stored temporarily and discharged to be used as a filler material in road construction or in the cement industry, for example. The preheated air with a temperature of approximately 250 °C - 450 °C enters the rotating-plate air preheater heat exchanger (18). Finally, the combustion air is compressed and supplied to the multi-fuel combustor.

The hot flue gas that leaves the first cyclone (16) enters a waste heat recovery system (4). The latter can be a heat recovery system with Rankine cycle or organic Rankine cycle to supply electricity and thermal energy for the use in the oil shale dryer or other process components.

The waste heat recovery system (4) cools down the hot flue gas exiting from the cyclone 1 (16). The flue gas exits from waste heat recovery system (4) via flue gas outlet (27). The flue gas temperature at the exit of the waste heat recovery system (4) is about 100 °C - 130 °C. Feedwater is pumped by the boiler feedwater pump (24) into the waste heat recovery system (4) and it is heated by the flue gas passing through the heat exchangers of the waste heat recovery system (4). The feedwater is finally converted into a superheated steam that enters a back-pressure steam turbine (non condensing steam turbine) or a steam turbine (extraction steam turbine) (25). Low-temperature steam extracted from the steam turbine is used in the dryer (5) to dry the oil shale. In the condenser (26), the steam at the outlet of the steam turbine condensates by means of cooling water or cooling air, depending on site conditions. The condensation heat may be recovered to use in the process.

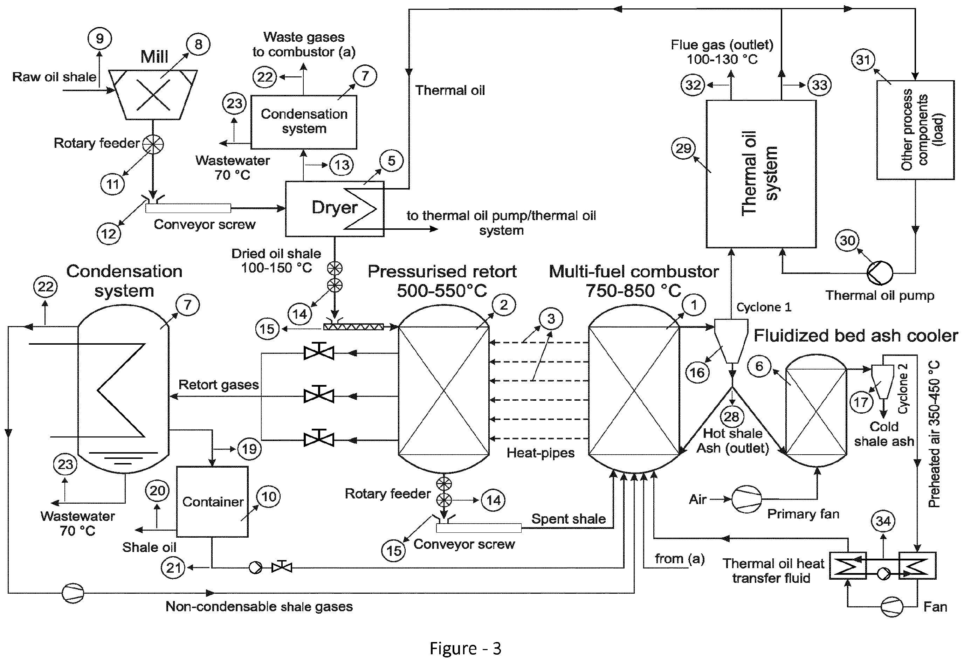

Figure 3 shows alternative process configurations. The main difference from Figure 2 is related to the waste heat recovery system (4) and the rotating-plate air preheater heat exchanger (18). In this alternative process, the thermal oil is used as a heat transfer fluid that absorbs the thermal energy and transfers the heat to other process equipment. In this context, the rotating-plate air preheater (18) is replaced with a thermal oil heat exchanger (34) and the waste heat recovery unit is based on thermal oil heat recovery system (29) to supply thermal energy for the use in the oil shale dryer or where it needs in the process. The use of the thermal oil heat recovery system compared for example to steam cycle characterises with several advantages such as the simplicity, the cost-effectiveness and the low maintenance costs.

The thermal oil heat recovery system (29) cools down the hot flue gas exiting from the cyclone 1 (16). The flue gas exits from thermal oil heat recovery system (29) via flue gas outlet (32). The flue gas temperature at the exit of thermal oil heat exchanger (29) is about 100 °C - 130 °C. The thermal oil is pumped by a thermal oil pump (30) into the thermal oil heat recovery system (29) and it is heated by the flue gas passing through the thermal oil heat exchangers of the heat recovery system (29). The heated thermal oil exits the thermal oil heat recovery system (33) and is sent to the dryer (5) to dry the oil shale and returns to the thermal oil pump (30). If necessary, heated thermal oil may be used for other process components (31). Air at the exit of cyclone 2 (17) is sent to the multi-fuel combustor via the thermal oil heat exchanger (34).

The system and process for retorting oil shale with indirectly heated retorting reactor with heat pipe heat exchangers developed by this invention comprises,
- **Multi-fuel combustor (1),** which is suitable for the combustion of different fuels, including spent shale (solid fuel), shale oil (liquid fuel), shale gases and waste gases (gaseous fuel),
- **Pressurised retort (2),** which is heated by means of heat pipe heat exchangers (3) connected to the multi-fuel combustor (1) and operated with an excess pressure compared to the atmospheric multi-fuel combustor (1) to prevent air/flue gas leakage from the multi-fuel combustor (1) to the pressurised retort (2) and designed as a moving bed with continuous oil shale feed from the top and the spent shale exits at the bottom, and the retort gases exits from bottom and/or from several locations at the sidewall,
- **Waste heat recovery system (4),** which is arranged downstream of the multi-fuel combustor and absorbs the waste heat of the flue gas to supply electricity and thermal energy for the use in the oil shale dryer or where it needs in the process,
- **Fluidized bed ash cooler (6),** which cools down the shale ash temperature and preheats the combustion air that is supplied to the multi-fuel combustor,
- **Oil shale dryer (5),** which decreases the moisture content of the raw oil shale using low-temperature steam, process water or thermal oil from the waste heat recovery system, providing the required thermal energy for the drying process,
- **Condensation system (7),** which extracts wastewater, shale oil and non-combustible gases (shale gases) from the retort gases.

The multi-fuel combustor (1) of this invention can be operated as bubbling fluidized bed or circulating fluidized bed reactor. Additionally the fluidized bed ash cooler (6) can be operated as bubbling fluidized bed, circulating fluidized bed system, moving bed fluidized bed cooler or fluid bed coolers.

The middle wall that is built between the pressurised retort (2) and the multi-fuel combustor (1) is the central element of the heat pipe (3) heat exchangers and supports the heat pipes (3), mechanically stabilizes the casing and separates the retort and the combustor from each other, preventing gas bypass despite the possible pressure difference.

The working material/liquid of heat pipe (3) heat exchangers is selected according to the desired temperature range of the heat transfer in the process, which is in general, alkali metals are suitable for high temperature ranges. In case of a temperature range of 700 °C - 1000 °C the working material/liquid of heat pipe (3) heat exchangers can be sodium. In that in case of a temperature range of 400 °C - 700 °C the working material/liquid of heat pipe (3) heat exchangers can be potassium or cesium.

In order to avoid any possible deformation of the heat pipes, the pipes may be supported by additional supporting walls that are mounted in the middle parts of both the pressurised retort (2) and the multi-fuel combustor (1),

The pressure in the pressurised retort (2) is controlled, so that a light excess pressure is existing for preventing the unwanted air/flue gas leakage from the multi-fuel combustor (1) to the pressurised retort (2).

The system and process for retorting oil shale with indirectly heated retorting reactor with heat pipe heat exchangers is characterized in that
- the raw oil shale is first crushed/grinded by the mill (8) to reduce its size,
- the crushed/grinded oil shale is fed to the dryer by rotary feeder (11) and/or conveyor screw (12) to be dried,
- the waste gas and vapour in the oil shale dryer (5) stream out from the gas-vapour exit (13) of the dryer to the condensation system (7),
- the wastewater condensates and the waste gases are supplied to the multi-fuel combustor (1) to be burned,
- wastewater (23) and non-condensable waste gases (22) leave the condensation system (7),
- the dried oil shale is fed to the top part of the pressurised retort (2) and falls down to the retort bottom due to gravity.

The system and process for retorting oil shale with indirectly heated retorting reactor with heat pipe heat exchangers is additionally characterized in that
- while the oil shale in the pressurised retort (2) is heated by means of the heat pipe (3) heat exchangers, its kerogen decomposes to shale gases and oil vapours (both known as retort gases),
- the retort gases exit at the bottom or from several locations at the sidewall of the retort (2),
- compared to counter flow (i.e. the oil shale flows from top to bottom, while the retort gases stream from bottom to top), the co-current flow prevents the possible condensation of the hot retort gases with the relatively cold oil shale at the top part of the retort (2),
- at the bottom of the pressurised retort (2), a rotary feeder (14) and/or screw conveyor (15) are used to transfer the spent shale to the multi-fuel combustor (1) to be burned, resulting in inert shale ash,
- the calcium carbonate (CaCO₃) in the spent shale is calcined in the multi-fuel combustor (1) and the obtained calcium oxide (CaO) is used for the flue gas desulphurisation,
- the retort gases leave the pressurised retort (2) and flow into a condensation system (7).

In the condensation system (7) of the system and process for retorting oil shale with indirectly heated retorting reactor with heat pipe heat exchangers is characterized in that
- in the condensation system (7), the shale oil is extracted and stored in a container (10) via shale oil exit (19) of condensation system (7), while the non-condensable shale gases are sent to the multi-fuel combustor (1) via exit of non-condensable shale gases (22),
- shale oil is received from the container (10) via shale oil exit (20) of container (10),
- part of the shale oil produced can be used in the multi-fuel combustor (1) to maintain the required minimum combustion temperature in case of the insufficient calorific values of the supplied fuels (spent shale, shale gases and waste gases) as well as to warm-up the combustor during the start-up procedure,
- part of the shale oil in the container is sent to the multi-fuel combustor (1) via shale oil exit (21) of container (10) to multi-fuel combustor (1),
- the wastewater is received from the condensation system (7) via exit of the wastewater (23) from the condensation system (7),
- the condensation heat of the condensation system (7) may be recovered to use in the process.

The system and process for retorting oil shale with indirectly heated retorting reactor with heat pipe heat exchangers is also characterized in that
- the preheated air with a temperature of approximately 250 °C - 450 °C is supplied at the bottom of the multi-fuel combustor (1) and the spent shale is deployed as bed material,
- the air/multi-fuel mixture is combusted and part of the thermal energy released is absorbed by the heat pipe (3) heat exchangers and transferred to the pressurised retort (2) for oil shale retorting,
- the remaining heat of the gas-solid mixture at approximately 750 °C - 850 °C streams from the multi-fuel combustor (1) to a first cyclone (16),
- the hot shale ash are separated from the gas-solid mixture in the cyclone 1 (16) from hot shale ash outlet (28),
- part of the shale ash may circulate back into the bed and the remaining part flows into a fluidized bed ash cooler (6),
- the fluidized bed ash cooler (6) cools down the shale ash temperature and simultaneously preheats the combustion air for the multi-fuel combustor (1).

In the system and process for retorting oil shale with indirectly heated retorting reactor with heat pipe heat exchangers;
- the cold shale ash exits the second cyclone (17) to a wet ash removal unit and then is fed to ash silos, stored temporarily and discharged to be used as a filler material in road construction or in the cement industry,
- the preheated air with a temperature of approximately 250 °C - 450 °C enters the rotating-plate air preheater heat exchanger (18),
- the combustion air is compressed and supplied to the multi-fuel combustor.

Additionally in the system and process for retorting oil shale with indirectly heated retorting reactor with heat pipe heat exchangers;
- the hot flue gas that leaves the first cyclone (16) enters a waste heat recovery system (4) with Rankine cycle or organic Rankine cycle to supply electricity and thermal energy for the use in the oil shale dryer or other process components,
- the waste heat recovery system (4) cools down the hot flue gas exiting from the cyclone 1 (16),
- the flue gas exits from waste heat recovery system (4) via flue gas outlet (27),
- feedwater is pumped by the boiler feedwater pump (24) into the waste heat recovery system (4) and it is heated by the flue gas passing through the heat exchangers of the waste heat recovery system (4),
- the feedwater is finally converted into a superheated steam that enters a back-pressure steam turbine or an extraction steam turbine (25),
- low-temperature steam extracted from the steam turbine or process water extracted from the water/steam circuit of the waste heat recovery system is used in the dryer (5) to dry the oil shale,
- in the condenser (26), the steam at the outlet of the steam turbine condensates by means of cooling water or cooling air,
- the condensation heat of the condenser (26) may be recovered to use in the process.

In the system and process for retorting oil shale with indirectly heated retorting reactor with heat pipe heat exchangers thermal oil heat recovery system (29) can be used to cool down the hot flue gas exiting from the cyclone 1 (16).

In the system and process for retorting oil shale with indirectly heated retorting reactor with heat pipe heat exchangers;
- the flue gas exits from thermal oil heat recovery system (29) via flue gas outlet (32),
- the thermal oil is pumped by a thermal oil pump (30) into the thermal oil heat recovery system (29) and it is heated by the flue gas passing through the heat exchangers of the thermal oil heat recovery system (29),
- the heated thermal oil exits the thermal oil heat recovery system (33) and is sent to the dryer (5) to dry the oil shale and returns to the thermal oil pump (30),
- if necessary, heated thermal oil may be used for other process components (31),
- air at the exit of cyclone 2 (17) is sent to the multi-fuel combustor via the thermal oil heat exchanger (34).

The rotating-plate air preheater (18) of the system and process for retorting oil shale with indirectly heated retorting reactor with heat pipe heat exchangers may be replaced with a thermal oil heat exchanger (34).

## Claims

1. A system for retorting oil shale, comprising, multi-fuel combustor (1), which is suitable for the combustion of different fuels, including spent shale, shale oil, shale gases and waste gases,
pressurised retort (2), which is operated with an excess pressure compared to the atmospheric multi-fuel combustor (1) to prevent air/flue gas leakage from the multi-fuel combustor (1) to the pressurised retort (2) and designed as a moving bed with continuous oil shale feed from the top and the spent shale exits at the bottom, and the retort gases exits from bottom and/or from several locations at the sidewall,
heat pipe heat exchanger (3) connected to the multi-fuel combustor (1) and configured to indirectly heat the pressurized retort (2),
waste heat recovery system (4), which is arranged downstream of the combustor and absorbs the waste heat of the flue gas to supply thermal energy for the use in the oil shale dryer or where it needs in the process,
fluidized bed ash cooler (6), which cools down the shale ash temperature and preheats the combustion air that is supplied to the multi-fuel combustor (1),
oil shale dryer (5), which decreases the moisture content of the raw oil shale using low-temperature steam, process water or thermal oil from the waste heat recovery system, providing the required thermal energy for the drying process,
condensation system (7), which extracts wastewater, shale oil and non-condensable gases from the retort gases.

2. A system for retorting oil shale with indirectly heated retorting reactor with heat pipe heat exchangers as claimed in claim 1, **characterized in that** the multi-fuel combustor (1) can be operated as bubbling fluidized bed or circulating fluidized bed reactor.

3. A system for retorting oil shale with indirectly heated retorting reactor with heat pipe heat exchangers as claimed in claim 1, **characterized in that** the fluidized bed ash cooler (6) can be operated as bubbling fluidized bed, circulating fluidized bed system, moving bed fluidized bed cooler or fluid bed coolers.

4. A system for retorting oil shale with indirectly heated retorting reactor with heat pipe heat exchangers as claimed in any one of the preceding claims, **characterized in that** the middle wall that is built between the pressurised retort (2) and the multi-fuel combustor (1) is the central element of the heat pipe (3) heat exchangers and supports the heat pipes (3), mechanically stabilizes the casing and separates the retort and the combustor from each other, preventing gas bypass despite the possible pressure difference.

5. A system for retorting oil shale with indirectly heated retorting reactor with heat pipe heat exchangers as claimed in any one of the preceding claims, **characterized in that** the working material/liquid of heat pipe (3) heat exchangers is selected according to the desired temperature range of the heat transfer in the process, which is in general, alkali metals are suitable for high temperature ranges.

6. A system for retorting oil shale with indirectly heated retorting reactor with heat pipe heat exchangers as claimed in any one of the preceding claims,
**characterized in that**
in case of a temperature range of 700 °C - 1000 °C the working material/liquid of heat pipe (3) heat exchangers can be sodium, or in case of a temperature range of 400 °C - 700 °C the working material/liquid of heat pipe (3) heat exchangers can be potassium or cesium.

7. A system for retorting oil shale with indirectly heated retorting reactor with heat pipe heat exchangers as claimed in any one of the preceding claims, **characterized in that** in order to avoid any possible deformation of the heat pipes, the pipes may be supported by additional supporting walls that are mounted in the middle parts of both the pressurised retort (2) and the multi-fuel combustor (1).

8. A system for retorting oil shale with indirectly heated retorting reactor with heat pipes as claimed in any one of the preceding claims, **characterized in that** the pressure in the pressurised retort (2) is controlled, so that a light excess pressure is existing for preventing the unwanted air/flue gas leakage from the multi-fuel combustor (1) to the pressurised retort (2).

9. A system for retorting oil shale with indirectly heated retorting reactor with heat pipe heat exchangers as claimed in any one of the preceding claims, **characterized in that**
• the raw oil shale is first crushed/grinded by the mill (8) to reduce its size,
• the crushed/grinded oil shale is fed to the dryer by rotary feeder (11) and/or conveyor screw (12) to be dried,
• the waste gas and vapour in the oil shale dryer (5) stream out from the gas-vapour exit (13) of the dryer to the condensation system (7),
• the wastewater condensates and the waste gases are supplied to the multi-fuel combustor (1) to be burned,
• wastewater (23) and non-condensable waste gases (22) leave the condensation system (7),
• the dried oil shale is fed to the top part of the pressurised retort (2) and falls down to the retort bottom due to gravity.

10. A system for retorting oil shale with indirectly heated retorting reactor with heat pipe heat exchangers as claimed in any one of the preceding claims, **characterized in that**
• while the oil shale in the pressurised retort (2) is heated by means of the heat pipe (3) heat exchangers, its kerogen decomposes to shale gases and oil vapours,
• the retort gases exit at the bottom or from several locations at the sidewall of the retort (2),
• compared to counter flow, the co-current flow prevents the possible condensation of the hot retort gases with the relatively cold oil shale at the top part of the retort (2),
• at the bottom of the pressurised retort (2), a rotary feeder (14) and/or screw conveyor (15) are used to transfer the spent shale to the multi-fuel combustor (1) to be burned, resulting in inert shale ash,
• the calcium carbonate (CaCO₃) in the spent shale is calcined in the multi-fuel combustor (1) and the obtained calcium oxide (CaO) is used for the flue gas desulphurisation,
• the retort gases leave the pressurised retort (2) and flow into a condensation system (7).

11. A system for retorting oil shale with indirectly heated retorting reactor with heat pipe heat exchangers as claimed in any one of the preceding claims, **characterized in that**
• in the condensation system (7), the shale oil is extracted and stored in a container (10) via shale oil exit (19) of condensation system (7), while the non-condensable shale gases are sent to the multi-fuel combustor (1) via exit of non-condensable shale gases (22),
• shale oil is received from the container (10) via shale oil exit (20) of container (10),
• part of the shale oil produced can be used in the multi-fuel combustor (1) to maintain the required minimum combustion temperature in case of the insufficient calorific values of the supplied fuels as well as to warm-up the combustor during the start-up procedure,
• part of the shale oil in the container is sent to the multi-fuel combustor (1) via shale oil exit (21) of container (10) to multi-fuel combustor (1),
• the wastewater is received from the condensation system (7) via exit of the wastewater (23) from the condensation system (7),
• the condensation heat of the condensation system (7) may be recovered to use in the process.

12. A system for retorting oil shale with indirectly heated retorting reactor with heat pipe heat exchangers as claimed in any one of the preceding claims, **characterized in that**
• the preheated air with a temperature of approximately 250 °C - 450 °C is supplied at the bottom of the multi-fuel combustor (1) and the spent shale is deployed as bed material,
• the air/multi-fuel mixture is combusted and part of the thermal energy released is absorbed by the heat pipe (3) heat exchangers and transferred to the pressurised retort (2) for oil shale retorting,
• the remaining heat of the gas-solid mixture at approximately 750 °C - 850 °C streams from the multi-fuel combustor (1) to a first cyclone (16),
• the hot shale ash are separated from the gas-solid mixture in the first cyclone cyclone (16) from hot shale ash outlet (28),
• part of the shale ash may circulate back into the bed and the remaining part flows into a fluidized bed ash cooler (6),
• the fluidized bed ash cooler (6) cools down the shale ash temperature and simultaneously preheats the combustion air for the multi-fuel combustor (1).

13. A system for retorting oil shale with indirectly heated retorting reactor with heat pipe heat exchangers as claimed in any one of the preceding claims, **characterized in that**
• the cold shale ash exits the second cyclone (17) to a wet ash removal unit and then is fed to ash silos, stored temporarily and discharged to be used as a filler material in road construction or in the cement industry,
• the preheated air with a temperature of approximately 250 °C - 450 °C enters the rotating-plate air preheater heat exchanger (18),
• the combustion air is compressed and supplied to the multi-fuel combustor (1).

14. A system for retorting oil shale with indirectly heated retorting reactor with heat pipe heat exchangers as claimed in any one of the preceding claims, **characterized in that**
• the hot flue gas that leaves the first cyclone (16) enters a waste heat recovery system (4) with Rankine cycle or organic Rankine cycle to supply electricity and thermal energy for the use in the oil shale dryer or other process components,
• the waste heat recovery system (4) cools down the hot flue gas exiting from the first cyclone (16),
• the flue gas exits from waste heat recovery system (4) via flue gas outlet (27),
• feedwater is pumped by the boiler feedwater pump (24) into the waste heat recovery system (4) and it is heated by the flue gas passing through the heat exchangers of the waste heat recovery system (4),
• the feedwater is finally converted into a superheated steam that enters a back-pressure steam turbine or an extraction steam turbine (25),
• low-temperature steam extracted from the steam turbine or process water extracted from the water/steam circuit of the waste heat recovery system is used in the dryer (5) to dry the oil shale,
• in the condenser (26), the steam at the outlet of the steam turbine condensates by means of cooling water or cooling air,
• the condensation heat of the condenser (26) may be recovered to use in the process.

15. A system for retorting oil shale with indirectly heated retorting reactor with heat pipe heat exchangers as claimed in any one of the preceding claims, **characterized in that** thermal oil heat recovery system (29) can be used to cool down the hot flue gas exiting from the first cyclone (16).

16. A system for retorting oil shale with indirectly heated retorting reactor with heat pipe heat exchangers as claimed in Claim 15, **characterized in that**
• the flue gas exits from thermal oil heat recovery system (29) via flue gas outlet (32),
• the thermal oil is pumped by a thermal oil pump (30) into the thermal oil heat recovery system (29) and it is heated by the flue gas passing through the heat exchangers of the thermal oil heat recovery system (29),
• the heated thermal oil exits the thermal oil heat recovery system (33) and is sent to the dryer (5) to dry the oil shale and returns to the thermal oil pump (30),
• if necessary, heated thermal oil may be used for other process components (31),
• air at the exit of a second cyclone (17) is sent to the multi-fuel combustor (1) via the thermal oil heat exchanger (34).

17. A system for retorting oil shale with indirectly heated retorting reactor with heat pipe heat exchangers as claimed in any one of the preceding claims,
**characterized in that** the rotating-plate air preheater (18) is replaced with a thermal oil heat exchanger (34).

18. A process for retorting oil shale, comprising,
combusting in a multi-fuel combustor (1) of different fuels, including spent shale, shale oil, shale gases and waste gases,
operating a pressurised retort (2) with an excess pressure compared to the atmospheric multi-fuel combustor (1) to prevent air/flue gas leakage from the multi-fuel combustor (1) to the pressurised retort (2) and designed as a moving bed with continuous oil shale feed from the top and the spent shale exits at the bottom, and the retort gases exits from bottom and/or from several locations at the sidewall,
indirectly heating the pressurized retort (2) with heat pipe heat exchanger (3) connected to the multi-fuel combustor (1), supplying thermal energy for the use in the oil shale dryer or where needed by a waste heat recovery system (4) that is arranged downstream of the combustor and that absorbs the waste heat of the flue gas,
preheating the combustion air that is supplied to the multi-fuel combustor (1) by a fluidized bed ash cooler (6) that cools down the shale ash temperature,
decreasing the moisture content of the raw oil shale by an oil shale dryer (5) using low-temperature steam, process water or thermal oil from the waste heat recovery system, providing the required thermal energy for the drying process,
extracting, by a condensation system (7), wastewater, shale oil and non-condensable gases from the retort gases.

## Patentansprüche

1. System zum Durchführen eines Retortenverfahrens von Ölschiefer, umfassend eine Mehrstoffbrennkammer (1), die für die Verbrennung verschiedener Brennstoffe, einschließlich ausgebeutetem Schiefer, Schieferöl, Schiefergasen und Abgasen, geeignet ist, eine Druckretorte (2), die mit einem Überdruck im Vergleich zu der atmosphärischen Mehrstoffbrennkammer (1) betrieben wird, um ein Austreten von Luft/Rauchgas aus der Mehrstoffbrennkammer (1) zu der Druckretorte (2) zu verhindern, und als ein Moving Bed aufgebaut ist, wobei Ölschiefer fortlaufend von oben zugeführt wird und der ausgebeutete Schiefer an dem Boden austritt, und die Retortengase an dem Boden und/oder an mehreren Stellen an der Seitenwand austreten,
ein Wärmerohr-Wärmetauscher (3), der mit der Mehrstoffbrennkammer (1) verbunden und so konfiguriert ist, dass er die Druckretorte (2) indirekt erhitzt,
ein Abwärmerückgewinnungssystem (4), das stromabwärts der Brennkammer angeordnet ist und die Abwärme des Rauchgases absorbiert, um Wärmeenergie für die Verwendung in dem Ölschiefer-Trockner oder dort zu liefern, wo sie in dem Prozess benötigt wird,
ein Wirbelschicht-Aschenkühler (6), der die Schieferaschetemperatur abkühlt und die Verbrennungsluft, die der Mehrstoffbrennkammer (1) zugeliefert wird, vorwärmt,
ein Ölschiefer-Trockner (5), der den Feuchtigkeitsgehalt des Rohölschiefers unter Verwendung von Niedertemperaturdampf, Prozesswasser oder Wärmeträgeröl aus dem Abwärmerückgewinnungssystem verringert, das die erforderliche Wärmeenergie für den Trocknungsprozess bereitstellt,
ein Kondensationssystem (7), das Abwasser, Schieferöl und nicht kondensierbare Gase aus den Retortengasen extrahiert.

2. System zum Durchführen eines Retortenverfahrens von Ölschiefer mit indirekt erhitztem Retortenreaktor mit Wärmerohr-Wärmetauschern nach Anspruch 1, **dadurch gekennzeichnet, dass** die Mehrstoffbrennkammer (1) als sprudelnde Wirbelschicht oder zirkulierender Wirbelschichtreaktor betrieben werden kann.

3. System zum Durchführen eines Retortenverfahrens von Ölschiefer mit indirekt erhitztem Retortenreaktor mit Wärmerohr-Wärmetauschern nach Anspruch 1, **dadurch gekennzeichnet, dass** der Wirbelschicht-Aschenkühler (6) als sprudelnde Wirbelschicht, zirkulierendes Wirbelschichtsystem, Moving Bed-Wirbelschichtkühler oder Fluidbettkühler betrieben werden kann.

4. System zum Durchführen eines Retortenverfahrens von Ölschiefer mit indirekt erhitztem Retortenreaktor mit Wärmerohr-Wärmetauschern nach einem der vorhergehenden Ansprüche, **dadurch gekennzeichnet, dass** die Mittelwand, die zwischen der Druckretorte (2) und der Mehrstoffbrennkammer (1) gebaut ist, das zentrale Element der Wärmerohr (3)-Wärmetauscher ist und die Wärmerohre (3) trägt, das Gehäuse mechanisch stabilisiert und die Retorte und die Brennkammer voneinander trennt, wodurch ein Gasbypass trotz der möglichen Druckunterschiede verhindert wird.

5. System zum Durchführen eines Retortenverfahrens von Ölschiefer mit indirekt erhitztem Retortenreaktor mit Wärmerohr-Wärmetauschern nach einem der vorhergehenden Ansprüche, **dadurch gekennzeichnet, dass** das Arbeitsmaterial/die Flüssigkeit der Wärmerohr (3)-Wärmetauscher gemäß dem gewünschten Temperaturbereich der Wärmeübertragung in dem Prozess im Allgemeinen aus Alkalimetallen ausgewählt wird, die für hohe Temperaturbereiche geeignet sind.

6. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
bei einem Temperaturbereich von 700 °C-1000 °C das Arbeitsmaterial/die Flüssigkeit der Wärmerohr (3)-Wärmetauscher Natrium sein kann oder im Falle eines Temperaturbereichs von 400 °C-700 °C das Arbeitsmaterial/die Flüssigkeit der Wärmerohr (3)-Wärmetauscher Kalium oder Cäsium sein kann.

7. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass** die Rohre, um eine mögliche Verformung der Wärmerohre zu vermeiden, durch zusätzliche Tragewände, die in den mittleren Teilen sowohl der Druckretorte (2) als auch der Mehrstoffbrennkammer (1) montiert sind, getragen werden können.

8. System zum Durchführen eines Retortenverfahrens von Ölschiefer mit indirekt erhitztem Retortenreaktor mit Wärmerohren, nach einem der vorhergehenden Ansprüche, **dadurch gekennzeichnet, dass** der Druck in der Druckretorte (2) so gesteuert wird, dass ein leichter Überdruck, zum Verhindern des unerwünschten Austretens von Luft/Rauchgas aus der Mehrstoffbrennkammer (1) zu der Druckretorte (2), vorhanden ist.

9. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• der Rohölschiefer zuerst durch die Mühle (8) zerkleinert/gemahlen wird, um seine Größe zu reduzieren,
• der zerkleinerte/gemahlene Ölschiefer dem Trockner durch eine Rotationszuführung (11) und/oder eine Förderschnecke (12) zugeführt wird, um getrocknet zu werden,
• das Abgas und der Dampf in dem Ölschiefer-Trockner (5) aus dem Gas-Dampf-Austritt (13) des Trockners zu dem Kondensationssystem (7) strömen,
• die Abwasserkondensate und die Abgase der Mehrstoffbrennkammer (1) zugeliefert werden, um verbrannt zu werden,
• Abwasser (23) und nicht kondensierbare Abgase (22) das Kondensationssystem (7) verlassen,
• der getrocknete Ölschiefer dem oberen Teil der Druckretorte (2) zugeführt wird und aufgrund von Schwerkraft auf den Retortenboden abfällt.

10. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• während der Ölschiefer in der Druckretorte (2) mittels der Wärmerohr (3)-Wärmetauscher erhitzt wird, sich sein Kerogen zu Schiefergasen und Öldämpfen zersetzt,
• die Retortengase an dem Boden oder an mehreren Stellen an der Seitenwand der Retorte (2) austreten,
• im Vergleich zu dem Gegenstrom der Gleichstrom die mögliche Kondensation der heißen Retortengase mit dem relativ kalten Ölschiefer in dem oberen Teil der Retorte (2) verhindert,
• an dem Boden der Druckretorte (2) ein Rotationszuführung (14) und/oder ein Schneckenförderer (15) verwendet werden, um den ausgebeuteten Schiefer in den Mehrstoffbrenner (1) zu übertragen, um verbrannt zu werden, was zu inerter Schieferasche führt,
• das Calciumcarbonat (CaCO₃) in dem ausgebeuteten Schiefer in der Mehrstoffbrennkammer (1) kalziniert wird und das erhaltene Calciumoxid (CaO) für die Rauchgasentschwefelung verwendet wird,
• die Retortengase die Druckretorte (2) verlassen und in ein Kondensationssystem (7) fließen.

11. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• in dem Kondensationssystem (7) das Schieferöl extrahiert und in einem Behälter (10) über den Schieferölaustritt (19) des Kondensationssystems (7) gelagert wird, während die nicht kondensierbaren Schiefergase über den Austritt nicht kondensierbarer Schiefergase (22) zu der Mehrstoffbrennkammer (1) geleitet werden,
• Schieferöl aus dem Behälter (10) über den Schieferölaustritt (20) des Behälters (10) aufgenommen wird,
• ein Teil des erzeugten Schieferöls in der Mehrstoffbrennkammer (1) verwendet werden kann, um bei unzureichenden Brennwerten der zugelieferten Brennstoffe die erforderliche Mindestverbrennungstemperatur aufrechtzuerhalten und die Brennkammer während des Startvorgangs aufzuwärmen,
• ein Teil des Schieferöls in dem Behälter zu der Mehrstoffbrennkammer (1) über den Schieferölaustritt (21) des Behälters (10) zu der Mehrstoffbrennkammer (1) geleitet wird,
• das Abwasser aus dem Kondensationssystem (7) über den Austritt des Abwassers (23) aus dem Kondensationssystem (7) aufgenommen wird,
• die Kondensationswärme des Kondensationssystems (7) zurückgewonnen werden kann, um in dem Prozess verwendet zu werden.

12. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• die vorgewärmte Luft mit einer Temperatur von ungefähr 250 °C-450 °C an dem Boden der Mehrstoffbrennkammer (1) zugeliefert und der ausgebeutete Schiefer als Bettmaterial eingesetzt wird,
• das Luft/Mehrstoff-Gemisch verbrannt wird und ein Teil der freigesetzten Wärmeenergie durch die Wärmerohr (3)-Wärmetauscher absorbiert und zu der Druckretorte (2) zum Durchführen eines Retortenverfahrens von Ölschiefer übertragen wird,
• die verbleibende Wärme des Gas-Feststoff-Gemisches bei ungefähr 750 °C-850 °C aus der Mehrstoffbrennkammer (1) zu einem ersten Zyklon (16) strömt,
• die heiße Schieferasche in dem ersten Zyklon (16) von dem Gas-Feststoff-Gemisch von dem Auslass der heißen Schieferasche (28) getrennt wird,
• ein Teil der Schieferasche zurück in das Bett zirkulieren kann und der verbleibende Teil in einen Wirbelschicht-Aschenkühler (6) fließt,
• der Wirbelschicht-Aschenkühler (6) die Schieferaschetemperatur abkühlt und gleichzeitig die Verbrennungsluft für die Mehrstoffbrennkammer (1) vorwärmt.

13. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• die kalte Schieferasche den zweiten Zyklon (17) zu einer Einheit für eine Entfernung feuchter Asche austritt und dann Aschesilos zugeführt wird, vorübergehend gelagert und abgelassen wird, um als Füllmaterial in dem Straßenbau oder in der Zementindustrie verwendet zu werden,
• die vorgewärmte Luft mit einer Temperatur von ungefähr 250 °C-450 °C in den rotierenden Plattenluftvorwärmetauscher (18) eintritt,
• die Verbrennungsluft komprimiert und der Mehrstoffbrennkammer (1) zugeliefert wird.

14. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass**
• das heiße Rauchgas, das den ersten Zyklon (16) verlässt, in ein Abwärmerückgewinnungssystem (4) mit Rankine-Kreislauf oder organischem Rankine-Kreislauf eintritt, um Strom und Wärmeenergie für die Verwendung in dem Ölschiefer-Trockner oder in anderen Prozesskomponenten zu liefern,
• das Abwärmerückgewinnungssystem (4) das aus dem ersten Zyklon (16) austretende heiße Rauchgas abkühlt,
• das Rauchgas über den Rauchgasauslass (27) aus dem Abwärmerückgewinnungssystem (4) austritt,
• Speisewasser durch die Kesselspeisewasserpumpe (24) in das Abwärmerückgewinnungssystem (4) gepumpt und durch das Rauchgas, das durch die Wärmetauscher des Abwärmerückgewinnungssystems (4) strömt, erhitzt wird,
• das Speisewasser schließlich in einen überhitzten Dampf umgewandelt wird, der in eine Gegendruckdampfturbine oder eine Extraktionsdampfturbine (25) eintritt,
• Niedertemperaturdampf, der aus der Dampfturbine extrahiert wird, oder Prozesswasser, das aus dem Wasser/Dampf-Kreislauf des Abwärmerückgewinnungssystems extrahiert wird, in dem Trockner (5) verwendet wird, um den Ölschiefer zu trocknen,
• in dem Kondensator (26) der Dampf an dem Auslass der Dampfturbine mittels Kühlwasser oder Kühlluft kondensiert,
• die Kondensationswärme des Kondensators (26) zurückgewonnen werden kann, um in dem Prozess verwendet zu werden.

15. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass** das Wärmeträgeröl-Wärmerückgewinnungssystem (29) verwendet werden kann, um das aus dem ersten Zyklon (16) austretende heiße Rauchgas abzukühlen.

16. System zum Durchführen eines Retortenverfahrens von Ölschiefer mit indirekt erhitztem Retortenreaktor mit Wärmerohr-Wärmetauschern nach Anspruch 15, **dadurch gekennzeichnet, dass**
• das Rauchgas aus dem Wärmeträgeröl-Wärmerückgewinnungssystem (29) über den Rauchgasauslass (32) austritt,
• das Wärmeträgeröl durch eine Wärmeträgerölpumpe (30) in das Wärmeträgeröl-Wärmerückgewinnungssystem (29) gepumpt und durch das Rauchgas, das sich durch die Wärmetauscher des Wärmeträgeröl-Wärmerückgewinnungssystems (29) bewegt, erhitzt wird,
• das erhitzte Wärmeträgeröl aus dem Wärmeträgeröl-Wärmerückgewinnungssystem (33) austritt und zu dem Trockner (5) geleitet wird, um den Ölschiefer zu trocknen, und zu der Wärmeträgerölpumpe (30) zurückkehrt,
• bei Bedarf erhitztes Wärmeträgeröl für andere Prozesskomponenten (31) verwendet werden kann,
• Luft an dem Austritt eines zweiten Zyklons (17) über den Wärmeträgeröl-Wärmetauscher (34) zu der Mehrstoffbrennkammer (1) geleitet wird.

17. System zum Durchführen eines Retortenverfahrens von Ölschiefer mit indirekt erhitztem Retortenreaktor mit Wärmerohr-Wärmetauschern, nach einem der vorhergehenden Ansprüche, **dadurch gekennzeichnet, dass** der rotierende Plattenluftvorwärmer (18) durch einen Wärmeträgeröl-Wärmetauscher (34) ersetzt ist.

18. Prozess zum Durchführen eines Retortenverfahrens von Ölschiefer, umfassend Verbrennen in einer Mehrstoffbrennkammer (1) verschiedener Brennstoffe, einschließlich ausgebeutetem Schiefer, Schieferöl, Schiefergasen und Abgasen,
Betreiben einer Druckretorte (2) mit einem Überdruck im Vergleich zu der atmosphärischen Mehrstoffbrennkammer (1), um ein Austreten von Luft/Rauchgas aus der Mehrstoffbrennkammer (1) zu der Druckretorte (2) zu verhindern, und als ein Moving Bed aufgebaut ist, wobei Ölschiefer fortlaufend von oben zugeführt wird und der ausgebeutete Schiefer an dem Boden austritt, und die Retortengase an dem Boden und/oder an mehreren Stellen an der Seitenwand austreten,
indirektes Erwärmen der Druckretorte (2) mit einem Wärmerohr-Wärmetauscher (3), der mit der Mehrstoffbrennkammer (1) verbunden ist,
Zuliefern von Wärmeenergie für die Verwendung in dem Ölschiefer-Trockner, oder wo sie benötigt wird, durch ein Abwärmerückgewinnungssystem (4), das stromabwärts der Brennkammer angeordnet ist und die Abwärme des Rauchgases absorbiert,
Vorerwärmen der Verbrennungsluft, die der Mehrstoffbrennkammer (1) durch einen Wirbelschicht-Aschenkühler (6), der die Schieferaschetemperatur abkühlt, zugeliefert wird, Verringern des Feuchtigkeitsgehalts des Rohölschiefers durch einen Ölschiefer-Trockner (5) unter Verwendung von Niedertemperaturdampf, Prozesswasser oder Wärmeträgeröl aus dem Abwärmerückgewinnungssystem, das die erforderliche Wärmeenergie für den Trocknungsprozess bereitstellt
Extrahieren, durch ein Kondensationssystem (7), von Abwasser, Schieferöl und nicht kondensierbaren Gasen aus den Retortengasen.

## Revendications

1. Système de distillation en cornue de schiste bitumineux, comprenant
une chambre de combustion à combustibles multiples (1), appropriée pour la combustion de différents combustibles, y compris le schiste usagé, l'huile de schiste, les gaz de schiste et les gaz résiduaires,
une cornue sous pression (2), qui est actionnée avec une surpression par rapport à la chambre de combustion atmosphérique à combustibles multiples (1) pour empêcher la fuite d'air/gaz de carneau de la chambre de combustion à combustibles multiples (1) vers la cornue sous pression (2) et conçue comme un lit mobile à alimentation en schiste bitumineux continue par le haut et le schiste usagé sortant par le bas, et les gaz de cornue sortant par le bas et/ou par plusieurs emplacements au niveau de la paroi latérale,
un échangeur thermique à caloducs (3) relié à la chambre de combustion à combustibles multiples (1) et conçu de manière à chauffer indirectement la cornue sous pression (2),
un système de récupération de chaleur (4), qui est disposé en aval de la chambre de combustion et absorbe la chaleur résiduelle du gaz de carneau pour procurer de l'énergie thermique destinée à être utilisée dans le sécheur à schiste bitumineux ou là où elle est requise dans le procédé,
un refroidisseur de cendres à lit fluidisé (6), qui refroidit la température des cendres de schiste et préchauffe l'air de combustion qui est procuré à la chambre de combustion à combustibles multiples (1),
un sécheur à schiste bitumineux (5), qui réduit la teneur en humidité du schiste bitumineux brut à l'aide de vapeur à basse température, d'eau de procédé ou d'huile thermique en provenance du système de récupération de chaleur, fournissant l'énergie thermique requise pour le procédé de séchage,
un système de condensation (7), qui extrait les eaux usagées, l'huile de schiste et les gaz non condensables des gaz de cornue.

2. Système de distillation en cornue de schiste bitumineux à réacteur de distillation en cornue indirecte doté d'échangeurs thermiques à caloducs selon la revendication 1,
**caractérisé en ce que** la chambre de combustion à combustibles multiples (1) peut être actionnée comme réacteur à lit fluidisé bouillonnant ou à lit fluidisé circulant.

3. Système de distillation en cornue de schiste bitumineux à réacteur de distillation en cornue indirecte doté d'échangeurs thermiques à caloducs selon la revendication 1,
**caractérisé en ce que** le refroidisseur de cendres à lit fluidisé (6) peut être actionné comme lit fluidisé bouillonnant, système à lit fluidisé circulant, refroidisseur à lit fluidisé à lit mobile ou refroidisseurs à lit fluidisé.

4. Système de distillation en cornue de schiste bitumineux à réacteur de distillation en cornue indirecte doté d'échangeurs thermiques à caloducs selon l'une quelconque des revendications précédentes,
**caractérisé en ce que** la paroi intermédiaire qui est construite entre la cornue sous pression (2) et la chambre de combustion à combustibles multiples (1) est l'élément central des échangeurs thermiques à caloducs (3) et soutient les caloducs (3), stabilise mécaniquement le carter et sépare la cornue et la chambre de combustion l'une de l'autre, empêchant la déviation de gaz malgré la différence de pression possible.

5. Système de distillation en cornue de schiste bitumineux à réacteur de distillation en cornue indirecte doté d'échangeurs thermiques à caloducs selon l'une quelconque des revendications précédentes,
**caractérisé en ce que** le matériau/liquide de travail des échangeurs thermiques à caloducs (3) est choisi en fonction de la plage de températures désirée du transfert thermique dans le procédé, lequel étant, en général, des métaux alcalins appropriés pour des plages de températures élevées.

6. Système de distillation en cornue de schiste bitumineux à réacteur de distillation en cornue indirecte doté d'échangeurs thermiques à caloducs selon l'une quelconque des revendications précédentes,
**caractérisé en ce que**, dans le cas d'une plage de températures de 700 °C à 1 000 °C, le matériau/liquide de travail des échangeurs thermiques à caloducs (3) peut être du sodium, ou dans le cas d'une plage de températures de 400 °C à 700 °C, le matériau/liquide de travail des échangeurs thermiques à caloducs (3) peut être du potassium ou du césium.

7. Système de distillation en cornue de schiste bitumineux à réacteur de distillation en cornue indirecte doté d'échangeurs thermiques à caloducs selon l'une quelconque des revendications précédentes,
**caractérisé en ce que**, pour éviter toute déformation possible des caloducs, les tuyaux peuvent être soutenus par des parois de support supplémentaires qui sont montées dans les parties médianes à la fois de la cornue sous pression (2) et de la chambre de combustion à combustibles multiples (1).

8. Système de distillation en cornue de schiste bitumineux à réacteur de distillation en cornue indirecte doté d'échangeurs thermiques à caloducs selon l'une quelconque des revendications précédentes,
**caractérisé en ce que** la pression dans la cornue sous pression (2) est régulée, de sorte qu'une légère surpression existe pour empêcher la fuite indésirable d'air/de gaz de carneau de la chambre de combustion à combustibles multiples (1) vers la cornue sous pression (2).

9. Système de distillation en cornue de schiste bitumineux à réacteur de distillation en cornue indirecte doté d'échangeurs thermiques à caloducs selon l'une quelconque des revendications précédentes,
**caractérisé en ce que**
• le schiste bitumineux brut est d'abord concassé/broyé par le broyeur (8) afin de réduire sa taille,
• un dispositif d'alimentation rotatif (11) et/ou un transporteur à vis (12) alimentent le séchoir en schiste bitumeux concassé/broyé pour qu'il y soit séché,
• le gaz résiduaire et la vapeur présents dans le sécheur à schiste bitumineux (5) s'écoulent de la sortie gaz-vapeur (13) du sécheur vers le système de condensation (7),
• les condensats des eaux usagées et les gaz résiduaires sont procurés à la chambre de combustion à combustibles multiples (1) pour être brûlés,
• les eaux usagées (23) et les gaz résiduaires non condensables (22) quittent le système de condensation (7),
• le schiste bitumineux séché est introduit dans la partie supérieure de la cornue sous pression (2) et tombe au fond de la cornue sous l'effet de la pesanteur.

10. Système de distillation en cornue de schiste bitumineux à réacteur de distillation en cornue indirecte doté d'échangeurs thermiques à caloducs selon l'une quelconque des revendications précédentes,
**caractérisé en ce que**
• pendant que le schiste bitumineux de la cornue sous pression (2) est chauffé au moyen des échangeurs thermiques à caloducs (3), son kérogène se décompose en gaz de schiste et en vapeurs d'huile,
• les gaz de cornue sortent par le bas ou par plusieurs emplacements au niveau de la paroi latérale de la cornue (2),
• par rapport au contre-écoulement, l'écoulement de co-courant empêche la condensation possible des gaz de cornue chauds avec le schiste bitumineux relativement froid au niveau de la partie supérieure de la cornue (2),
• au fond de la cornue sous pression (2), un dispositif d'alimentation rotatif (14) et/ou un transporteur à vis (15) sont utilisés pour transférer le schiste usagé vers la chambre de combustion à combustibles multiples (1) pour qu'il y soit brûlé, ce qui produit des cendres de schiste inertes,
• le carbonate de calcium (CaCO3) dans le schiste usagé est calciné dans la chambre de combustion à combustibles multiples (1) et l'oxyde de calcium (CaO) obtenu est utilisé pour la désulfuration des gaz de carneau,
• les gaz de cornue quittent la cornue sous pression (2) et entrent dans un système de condensation (7).

11. Système de distillation en cornue de schiste bitumineux à réacteur de distillation en cornue indirecte doté d'échangeurs thermiques à caloducs selon l'une quelconque des revendications précédentes,
**caractérisé en ce que**
• dans le système de condensation (7), l'huile de schiste est extraite et stockée dans un récipient (10) par l'intermédiaire de la sortie d'huile de schiste (19) du système de condensation (7), alors que les gaz de schiste non condensables sont envoyés à la chambre de combustion à combustibles multiples (1) par sortie des gaz de schiste non condensables (22),
• l'huile de schiste est reçue en provenance du récipient (10) par sortie de l'huile de schiste (20) du récipient (10),
• une partie de l'huile de schiste produite peut être utilisée dans la chambre de combustion à combustibles multiples (1) pour maintenir la température de combustion minimale requise en cas de valeurs calorifiques insuffisantes des combustibles procurés ainsi que pour réchauffer la chambre de combustion pendant la procédure de mise en service,
• une partie de l'huile de schiste contenue dans le récipient est envoyée à la chambre de combustion à combustibles multiples (1) par sortie de l'huile de schiste (21) du récipient (10) vers la chambre de combustion à combustibles multiples (1),
• les eaux usagées sont reçues en provenance du système de condensation (7) par sortie des eaux usagées (23) du système de condensation (7),
• la chaleur de condensation du système de condensation (7) peut être récupérée pour être utilisée dans le procédé.

12. Système de distillation en cornue de schiste bitumineux à réacteur de distillation en cornue indirecte doté d'échangeurs thermiques à caloducs selon l'une quelconque des revendications précédentes,
**caractérisé en ce que**
• l'air préchauffé à une température d'environ 250 °C à 450 °C est procuré au fond de la chambre de combustion à combustibles multiples (1) et le schiste usagé est déployé comme matériau de lit,
• le mélange air/combustibles multiples est brûlé et une partie de l'énergie thermique libérée est absorbée par les échangeurs thermiques à caloducs (3) et transférée dans la cornue sous pression (2) pour la distillation en cornue du schiste bitumineux,
• la chaleur restante du mélange gaz-solides à environ 750 °C - 850 °C s'écoule de la chambre de combustion à combustibles multiples (1) vers un premier cyclone (16),
• les cendres de schiste chaudes sont séparées du mélange gaz-solides dans le premier cyclone (16) d'un orifice de sortie de cendres de schiste chaudes (28),
• une partie des cendres de schiste peut recirculer vers le lit et la partie restante peut s'écouler dans un refroidisseur de cendres à lit fluidisé (6),
• le refroidisseur de cendres à lit fluidisé (6) refroidit la température des cendres de schiste et préchauffe simultanément l'air de combustion pour la chambre de combustion à combustibles multiples (1).

13. Système de distillation en cornue de schiste bitumineux à réacteur de distillation en cornue indirecte doté d'échangeurs thermiques à caloducs selon l'une quelconque des revendications précédentes,
**caractérisé en ce que**
• les cendres de schiste froides sortent du second cyclone (17) vers une unité d'élimination des cendres humides, puis sont destinées à alimenter des silos à cendres, à y être stockées temporairement et à être évacuées pour être utilisées comme matériau de remplissage dans la construction de routes ou dans l'industrie du ciment,
• l'air préchauffé à une température d'environ 250 °C à 450 °C pénètre dans l'échangeur thermique à préchauffeur d'air à plaque rotative (18),
• l'air de combustion est comprimé et procuré à la chambre de combustion à combustibles multiples (1).

14. Système de distillation en cornue de schiste bitumineux à réacteur de distillation en cornue indirecte doté d'échangeurs thermiques à caloducs selon l'une quelconque des revendications précédentes,
**caractérisé en ce que**
• le gaz de carneau chaud qui quitte le premier cyclone (16) pénètre dans un système de récupération de chaleur (4) à cycle de Rankine ou à cycle de Rankine à fluide organique pour procurer de l'électricité et de l'énergie thermique destinées à être utilisées dans le sécheur à schiste bitumineux ou d'autres constituants de procédé,
• le système de récupération de chaleur (4) refroidit le gaz de carneau chaud sortant du premier cyclone (16),
• le gaz de carneau sort du système de récupération de chaleur (4) par l'intermédiaire de l'orifice de sortie du gaz de carneau (27),
• l'eau d'alimentation est pompée par la pompe à eau d'alimentation de chaudière (24) dans le système de récupération de chaleur (4) et est chauffée par le gaz de carneau traversant les échangeurs thermiques du système de récupération de chaleur (4),
• l'eau d'alimentation est enfin convertie en une vapeur surchauffée qui entre dans une turbine à vapeur à contre-pression ou dans une turbine à vapeur d'extraction (25),
• de la vapeur à basse température extraite de la turbine à vapeur ou de l'eau de procédé extraite du circuit eau/vapeur du système de récupération de chaleur est utilisée dans le sécheur (5) pour sécher le schiste bitumineux,
• dans le condenseur (26), la vapeur au niveau de l'orifice de sortie de la turbine à vapeur se condense au moyen d'eau de refroidissement ou d'air de refroidissement,
• la chaleur de condensation du condenseur (26) peut être récupérée pour être utilisée dans le procédé.

15. Système de distillation en cornue de schiste bitumineux à réacteur de distillation en cornue indirecte doté d'échangeurs thermiques à caloducs selon l'une quelconque des revendications précédentes,
**caractérisé en ce que** le système de récupération de chaleur à huile thermique (29) peut être utilisé pour refroidir le gaz de carneau chaud sortant du premier cyclone (16).

16. Système de distillation en cornue de schiste bitumineux à réacteur de distillation en cornue indirecte doté d'échangeurs thermiques à caloducs selon la revendication 15,
**caractérisé en ce que**
• le gaz de carneau sort du système de récupération de chaleur à l'huile thermique (29) par l'intermédiaire de l'orifice de sortie du gaz de carneau (32),
• l'huile thermique est pompée par une pompe à huile thermique (30) dans le système de récupération de chaleur à huile thermique (29) et est chauffée par le gaz de carneau traversant les échangeurs thermiques du système de récupération de chaleur à huile thermique (29),
• l'huile thermique chauffée sort du système de récupération de chaleur à l'huile thermique (33) et est envoyée vers le sécheur (5) pour sécher le schiste bitumineux et retourne à la pompe à huile thermique (30),
• si nécessaire, de l'huile thermique chauffée peut être utilisée pour d'autres constituants du procédé (31),
• l'air au niveau de l'orifice de sortie d'un second cyclone (17) est envoyé à la chambre de combustion à combustibles multiples (1) par l'intermédiaire de l'échangeur thermique à huile thermique (34).

17. Système de distillation en cornue de schiste bitumineux à réacteur de distillation en cornue indirecte doté d'échangeurs thermiques à caloducs selon l'une quelconque des revendications précédentes,
**caractérisé en ce que** le préchauffeur d'air à plaque rotative (18) est remplacé par un échangeur thermique à huile thermique (34).

18. Procédé de distillation en cornue de schiste bitumineux, comprenant
la combustion dans une chambre de combustion à combustibles multiples (1) de différents combustibles, y compris le schiste usagé, l'huile de schiste, les gaz de schiste et les gaz résiduaires,
l'actionnement d'une cornue sous pression (2) avec une surpression par rapport à la chambre de combustion atmosphérique à combustibles multiples (1) pour empêcher la fuite d'air/de gaz de carneau de la chambre de combustion à combustibles multiples (1) à la cornue sous pression (2) et conçue comme un lit mobile à alimentation en schiste bitumineux continue par le haut et le schiste usagé sortant par le bas, et les gaz de cornue sortant par le bas et/ou par plusieurs emplacements au niveau de la paroi latérale,
le chauffage indirect de la cornue sous pression (2) au moyen d'un échangeur thermique à caloducs (3) relié à la chambre de combustion à combustibles multiples (1),
le fait de procurer de l'énergie thermique destinée à être utilisée dans le sécheur à schiste bitumineux ou là où elle est requise par un système de récupération de chaleur (4) qui est disposé en aval de la chambre de combustion et qui absorbe la chaleur résiduelle du gaz de carneau,
le préchauffage de l'air de combustion procuré à la chambre de combustion à combustibles multiples (1) par un refroidisseur de cendres à lit fluidisé (6) qui refroidit la température des cendres de schiste,
la réduction de la teneur en humidité du schiste bitumineux brut par un sécheur à schiste bitumineux (5) à l'aide de vapeur à basse température, d'eau de procédé ou d'huile thermique du système de récupération de chaleur,
la fourniture de l'énergie thermique requise pour le procédé de séchage,
l'extraction, au moyen d'un système de condensation (7), des eaux usagées, de l'huile de schiste et des gaz non condensables des gaz de cornue.
